# EUROPEAN PATENT SPECIFICATION

(11) **EP 0 864 766 B1**
(45) Date of publication and mention of the grant of the patent: **24.03.2004**
(21) Application number: 97117866.0
(22) Date of filing: 15.10.1997
(51) Int. Cl.: F16B 37/06

(54) **Component assembly, method of attaching an element to a plate-like component to form a component assembly and die button for carrying out this method**
Zusammenbau von Bauteilen, Verfahren zum Befestigen eines Bauteils auf einem plattenförmigen Körper sowie Prägeform zur Durchführung dieses Verfahrens
Ensemble d'éléments, méthode pour la fixation d'un élément sur une plaque ainsi que l'estampage pour la mise en oeuvre du procédé

(30) Priority: 12.03.1997 DE 19710246
(43) Date of publication of application: 16.09.1998
(73) Proprietor: Profil Verbindungstechnik GmbH & Co. KG, 61381 Friedrichsdorf (DE)
(72) Inventor: Müller, Rudolf, 60437 Frankfurt / Main (DE)
(74) Representative: Morgan, James G.

(56) References cited:
- FR-A- 2 560 305
- US-A- 3 469 613
- US-A- 3 506 050
- US-A- 4 484 385

## Description

The present invention relates to a component assembly comprising an element attached to a plate-like component, in particular a sheet metal component, wherein a ring-shaped recess is present at an end face of the element facing the component within a raised ring-shaped contact surface, wherein at least one undercut is provided in a side wall of the recess, and also features providing security against rotation are provided and wherein a cylindrical punch section concentric to the central longitudinal axis of the element projects at the said end face within the ring-shaped recess and the outer boundary wall of the cylindrical punch section has a preferably ring-shaped undercut.

A component assembly of this kind is known from EP-A-0 553 822, from the corresponding US patent 5,340,251 and also from the European application with the publication number EP-A-0 669 473. Similar component assemblies of this kind are known from US-A-3,648,747, and also from the further US-Patents 4,484,385, 3,469,613, 5,340,251, 3,234,987 and 3,253,631.

US-A-3,648,747, US-A-4,484,385 and US-A-3,469,613 all disclose nut elements having a central punch section of square or rectangular cross section, whereas the elements of EP-A-553822, US-A-5,340,252 and EP-A-0 669 473 have cylindrical punch section of circular cross section.

A very similar element is also known from the European application with the publication number EP-A-0 663 247, however, this document is concerned with the manufacturing of an element of this kind rather than with the element itself.

Such elements are generally formed as elements with hollow bodies, or precisely as nut elements, but could however also for example have a simple cylindrical bore to receive a spigot. In addition, such elements could also be formed in the manner of bolt elements and in this case the head of the bolt element is secured to the sheet metal part or to the plate-like component and the head would have the above named design. Finally, the element can be regarded quite generally as a functional element, with it being possible to realise the most diverse functions. For example, the function of a nut through the provision of an element with a hollow body having an internal thread, or the function of a bolt by the provision of a shaft or spigot part, or the function of for example a pin for the clamped attachment of other components, such as carpet eyes, or electrical terminals. Ultimately, it is not the function which is important, but rather the joint or attachment between the element and the plate-like component which normally consists of a sheet metal, but with other materials such as plastic panels also entering into consideration.

The known elements in accordance with the above named prior art are all elements having hollow bodies which are as a rule formed as nut elements. They all offer a certain degree of security against rotation (twist-out) so that on screwing-in a bolt element a rotation of the element having the hollow body is generally avoided. Moreover, the known elements have a certain press-out resistance. Nevertheless, improved security against rotation (twist-out) and higher press-out resistances are always desirable characteristics for such elements.

It has been shown with the known elements that the elements sometimes tear out of the plate-like component (normally a piece of sheet metal) in operation and under alternating loads. The manufacture of such elements having hollow bodies is also relatively complicated and a problem exists in as much as it is difficult to simultaneously keep the weight of the element small and to make the contact surface of sufficiently large dimensions.

The undercut in the side wall of the ring-shaped recess, which is necessary to produce the required press-out resistance of the hollow body is namely normally achieved by subjecting the element having a hollow body to a crushing process at the peripherally extending outer surface, whereby the side wall of the ring-shaped recess is brought from an initially axially parallel position into an inclined position. In this way, the opening to the ring-shaped recess between the pilot part and the now inclined side wall is reduced in comparison to the base surface of the recess and the undercut is produced. Through this crushing process the element having the hollow body however also has an inclined flank at the outer jacket surface adjacent to the end face confronting the component. This can lead to a situation in which the contact surface at the end face of the element becomes too small, with the contact surface being so deformed during the attachment of the plate-like component that it acts in a knife-like manner under load and a high surface pressure results between the component and the element having the hollow body.

As a result of this high surface pressure, the plate-like component yields after a few hours of operation and the element is no longer as tightly attached to the component as desired. This leads eventually to settling in operation so that the prestress of a bolt inserted into the element reduces to zero, whereby the bolted connection fails.

The said inclined flank at the transition from the outer jacket surface into the end face of the element however also signifies an unnecessary waste of material, because material which is so to say present radially outside of the contact surface at the element does not provide any contribution to the strength of the connection or of the element. In other words, the elements are heavier than is absolutely necessary, which ultimately represents an economic disadvantage.

The object of the present invention is to further improve a component assembly of the initially named kind in such a way that on the one hand the security against rotation and/or the press-out resistance are improved but, on the other hand, with the manufacture of the element being simplified, and with the further development preferably also being effected in such a way that a saving of material is possible. It should also be ensured that the characteristics of the component assembly, i.e. the connection of the element to the sheet metal part is improved with respect to alternating loads, i.e. the danger of settling of the element and reduction of the prestress force and eventual tearing of the element out of the sheet metal part should be substantially reduced.

In order to satisfy this object, the component assembly of the invention according to independent claim 1 is characterised in that the material of the plate-like component contacts said contact surface and lines said ring recess at least at the outer side wall and base wall thereof and is secured therein by a ring step or local noses projecting radially from said cylindrical punch section and produced by linearly displacing material from the outside of said cylindrical punch section in order to capture or clamp material of the component lining said ring-shaped recess between itself and the base surface of the ring-shaped recess.

A method for the insertion of an element of this kind can be seen from independent claim 17. A preferred embodiment of the method is characterised in that the punch section of the element is indented locally at its end face using a die button (as defined in independent claim 19) which has teeth, for example from two to six teeth, which are arranged radially within its projecting cylindrical punch section, which project radially inwardly into the central passage of the die button and are set back from the end face of the projecting cylindrical section of the die button so that material is displaced from the punch section of the element into the ring recess in such a way that it projects from the inner side wall of the ring recess at least substantially radially into the ring recess and there engages over material of the plate-like component which has previously been pressed into the ring recess by the end face of the projecting cylindrical section of the die button and preferably clamps this material between itself and the base surface of the ring recess.

The invention namely recognises that in some elements of the initially named kind it is difficult to ensure, in practical operation, that the sheet material of the plate-like component is actually and always reliably deformed into the undercut in the cylindrical punch section. If this is, however, not ensured, then the security of the form-locked connection of the component to the undercut in the outer side wall of the ring-shaped recess is questionable. On the one hand, the security against rotation suffers, as does also the press-out resistance on the other hand. The stability in operation in the event of alternating loads is in many cases deficient.

With the previously known elements, a deformation of the cylindrical punch section is not intended and is also not possible, because otherwise the danger would exist that the inner thread of the nut element is deformed, whereby the element would become unusable. One could indeed theoretically increase the radial dimensions of the cylindrical punch part, in order to reduce the danger of deformation of the thread cylinder, this would, however, lead to a situation in which the elements would become heavier and in which the contact surface would always be displaced further outwardly, so that one would always have to work with larger and thicker washers, in order to transfer the load from the bolt element to the nut element, whereby the connection as a whole become heavier and more expensive.

The invention here consciously takes a different route in that the cylindrical punch section is not deformed in the sense of folding it over onto the sheet metal material in order to clamp the latter, but rather only a small portion of the cylindrical punch section is locally displaced downwardly relative to the remainder of the punch section by the die button, and hereby clamps the material of the component previously pressed into the peripherally extending recess between itself and the base surface of the ring recess. On the one hand, the form-locked connection between the element and the component is improved in the sense that at these locations the material of the component fully fills out the opening which is present, i.e. the undercut at the cylindrical punch section is fully filled out. On the other hand, the material displacement ensures that the end face of the die button permanently prestresses the material of the component in the region of the recess, whereby an even higher quality joint can be ensured.

Since the teeth of the die button, which are responsible for this material displacement, are only locally present within the through passage of the die button and have relatively small dimensions, it is possible to dispose of the punch slug which is punched out of the sheet metal part by the cylindrical punch section of the element through the through passage of the die button as desired, and indeed without having to provide a corresponding plunger at the setting head side with the task of pressing the punch slug through the through passage of the die button. A preceding hole punch is also not required. The element is self-piercing.

Through this type of connection, a deformation of the thread need no longer be feared. It is only necessary to provide the cylindrical punch section of the element with a small supply of material which is suitable for this material displacement.

It is also particularly advantageous of the invention that one and the same element can be used with components of different thicknesses, so that it is for example entirely possible to cover with just one element the sheet metal thicknesses which are customary in the design of coachwork or car bodies. The invention is, however, particularly advantageously usable with thin and high-strength sheet metal because the problem of non-complete filling of the base region of the ring recess by the sheet metal material is particularly acute here.

Although a substantial improvement of security against rotation, of the press-out force and of the resistance to alternating loads is already provided by the above discussed features, it is also possible to achieve further improvements.

In this sense the outer side wall of the recess is so designed in accordance with claim 2 that it is of at least substantially polygonal shape in plan view in a manner known per se. In this way the security against rotation is improved relative to a round design of the ring recess.

The security against rotation can, however, be further decisively increased if, in accordance with claim 3, recesses which are mutually spaced from one another are provided in the raised, peripherally extending contact surface, with these preferably being formed in such a way that they form radially inwardly projecting raised portions or noses at the outer side wall of the recess which form the undercuts.

The possibility also exists, in accordance with the claims 6 and 7, of providing noses which result in security against rotation in the region of the transition from the base surface of the ring shaped recess into the outer side wall and/or in the region of the transition between the base surface of the ring-shaped recess and the cylindrical punch section, and in both cases the noses providing security against rotation are preferably uniformly distributed around the element and are approximately triangular in plan view.

A particularly preferred embodiment of the element is characterised in that the cylindrical punch section, which preferably has a ring-like undercut, has a ring-like end face which is arranged at least substantially perpendicular to the central longitudinal axis of the element or of the punch section and merges via a ring shoulder into a ring region of the cylindrical punch section of larger diameter, with this ring region being set back from the free end face of the cylindrical punch section.

This embodiment leads, on the one hand, to the material which is displaced by the teeth of the die button originating from the ring shoulder region of the punch section, i.e. from a region radially outside of the ring-like end face of the cylindrical punch section, whereby the danger of deformation of the thread is reduced. Moreover, it is easier to deform material from this region in such a way that the desired form-locked connection with the sheet material results.

Since the ring-like end face of the cylindrical punch section lies radially within the ring shoulder, it leads to an easy deformation of the outer ring region of the punch slug, whereby the latter can be more easily disposed of past the teeth through the central passage of the die button without jamming having to be feared in this region.

Through the provision of noses or webs in the region of the ring shoulder of the cylindrical punch section, with the noses or webs preferably extending from the free end face of the cylindrical punch section up to the outer diameter of the ring-like region of the cylindrical punch section and being of approximately triangular shape in side view, one succeeds in stiffening the element in this region on the one hand, but also in improving the piercing behaviour on the other hand, because the plate-like component is ultimately pierced in the region of the ring shoulder, i.e. not at the free end face of the cylindrical punch section.

A particular advantage of the element in accordance with the present invention lies in the fact that it can be used with sheet metal parts of different thicknesses, i.e. one and the same element can be used for almost all the sheet metal thicknesses which are encountered in the construction of vehicle bodywork, i.e. sheet metal thicknesses from approximately 0.5 mm up to 3 mm or more. The die button simply has to be matched in each case to the prevailing sheet metal thickness.

Particularly preferred embodiments of the component assembly, of the die button and also of the method of inserting the same can be seen from the further claims, and also from the subsequent description.

The invention will subsequently be explained in more detail with reference to embodiments and to the drawings in which are shown:
- Fig. 1: a schematic longitudinal section through a nut element with piercing behaviour and also through a die button, which cooperates with the nut element, and indeed during the execution of the connection to a sheet metal part, with a possible modification being drawn in on the left side of the representation,
- Fig. 2: a representation of a part of an element having a hollow body similar to the element in Fig. 1 but in a further modification, with only the region around the cylindrical punch section being shown and with only the left half of the element being illustrated, the right half being identified thereto,
- Fig. 3: a longitudinal section in accordance with Fig. 1, but of the preferred embodiment of the present invention,
- Fig. 4: a plan view of the element of Fig. 3 as seen in the direction of viewing IV of Fig. 3, but prior to the insertion into a sheet metal part,
- Fig. 5: a plan view onto the end face of the die button of Fig. 3 as seen in the direction of viewing V, but without a sheet metal part,
- Fig. 6: a schematic part longitudinal section through the left half of the die button of Fig. 5 in accordance with the section plane VI-VI in Fig. 5,
- Fig. 7: a representation similar to Fig. 1, but only of the left half of the longitudinal cross-section and at an earlier stage of the insertion procedure with a further modified element having a hollow body, the section having been made at a different angular position than in Fig. 1, and
- Fig. 8: a part longitudinal section through the left half of a further embodiment of an element in accordance with the invention having a hollow body.

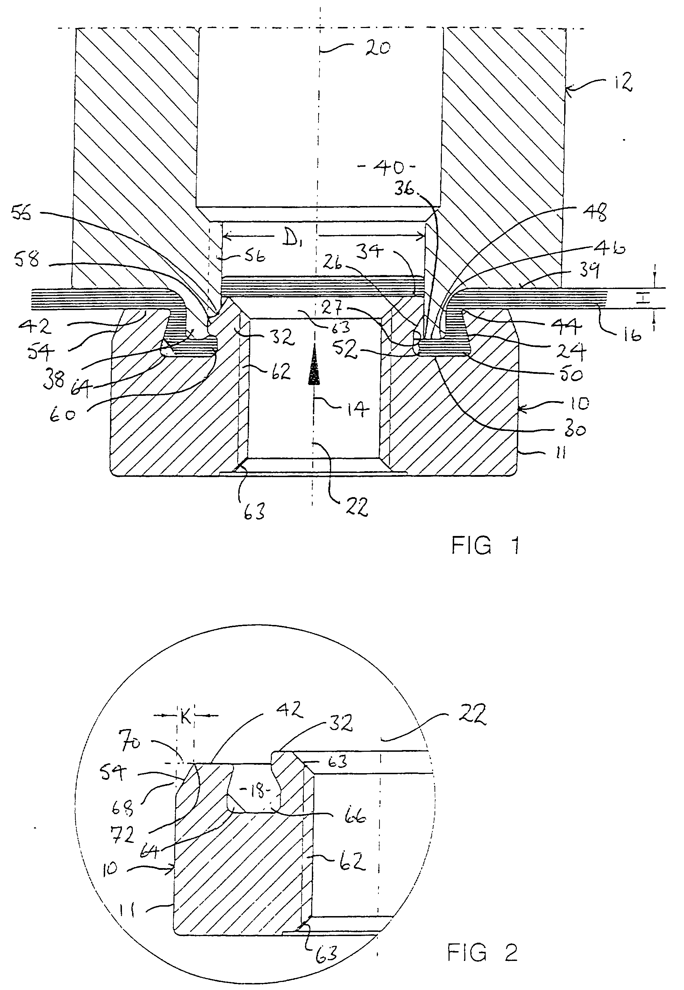

Fig. 1 first shows a longitudinal cross-section through an element 10 having a hollow body and through the die button 12 which cooperates with it immediately after carrying out a setting procedure in which the sheet metal part has been deformed into a ring recess 18 of the element 10, as a result of a relative movement of the element 10 having the hollow body in the direction of the arrow 14 onto a sheet metal part 16 supported on the die button 12.

Normally, the arrangement is contrived in exactly the opposite direction to the illustrated arrangement, i.e. the element 10 is pressed from above by a setting head onto the sheet metal part and onto the die button lying beneath it. The element 10 is moved during this in the setting head (not shown) coaxial to the central longitudinal axis 20 of the die button, i.e. the central longitudinal axis 22 of the element 10 should be aligned with the central longitudinal axis 20 of the die button.

The arrangement is normally contrived in such a way that the setting head for the element 10 is attached to the upper tool of the press or to an intermediate plate of the press, whereas the die button 12 is associated with the lower tool of the press, or is arranged in or on the latter. However, the inverted arrangement of Fig. 1 is entirely conceivable. It is also not absolutely essential to use a press for the setting process, for example a robot could be used to carry out the setting process.

At the right-hand side of Fig. 1 one can see a cross-section through the ring recess 18 in the region of the end face of the hollow element 10 confronting the sheet metal part 16 or the die button 12, with this ring recess 18 being bounded at the radially outer side by an outer side wall 24, and also at the radially inner side by an inner side wall 26 and at the bottom by a base surface 30 which extends perpendicular to the central longitudinal axis.

In the cross-sectional illustration of the right-hand side of Fig. 1, the outer side wall 24 is of inclined design and thus forms an opening at the entry the ring recess 18 which is narrower in comparison to the radial dimension of the base surface 30. The inner side wall 26 is formed by the radially outer surface of a cylindrical punch section 32 of the hollow element 10.

In plan view the ring recess can appear circular, so to say with a circular profile for the outer wall and a circular profile for the inner wall, or it can also be of polygonal, for example octagonal shape at the outer side wall, with both variants being known in the prior art. The cylindrical punch section 32 appears in contrast to be circularly round in plan view (not shown) with an outer diameter D1 which corresponds at least substantially to the inner diameter of the die button 12 in the region of the sheet metal part, but which is functionally smaller than this inner diameter. One notes that the cylindrical side wall 26 has an undercut in similar manner to the outer side wall of the ring recess 18, and indeed axially beneath the ring-like piercing surface 34 at the free end face of the cylindrical punch section 32.

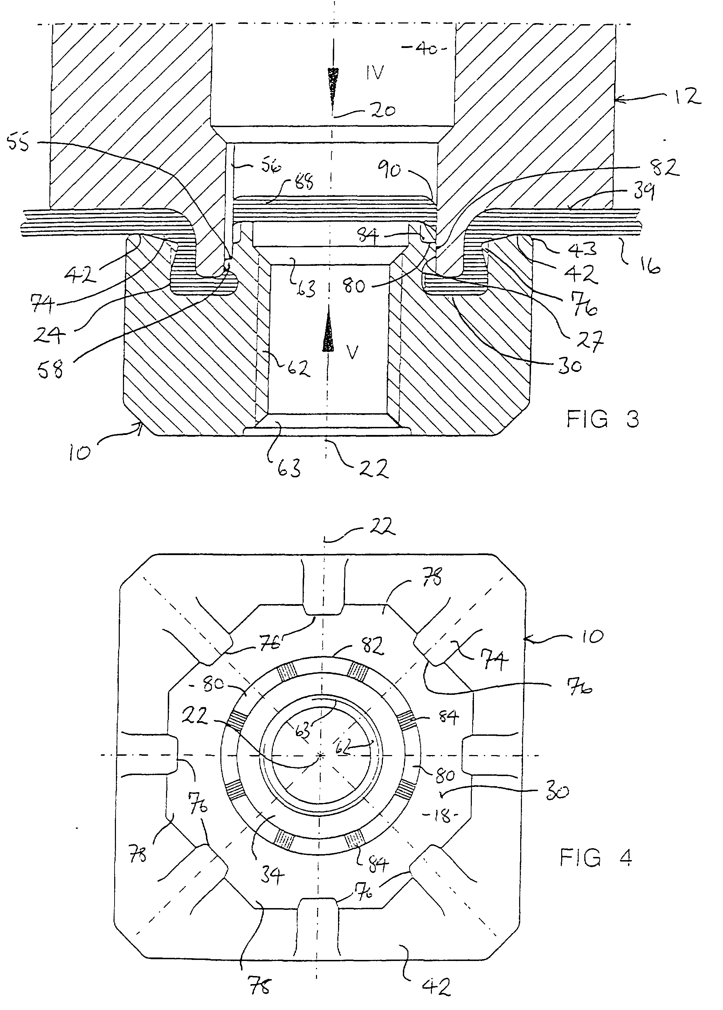

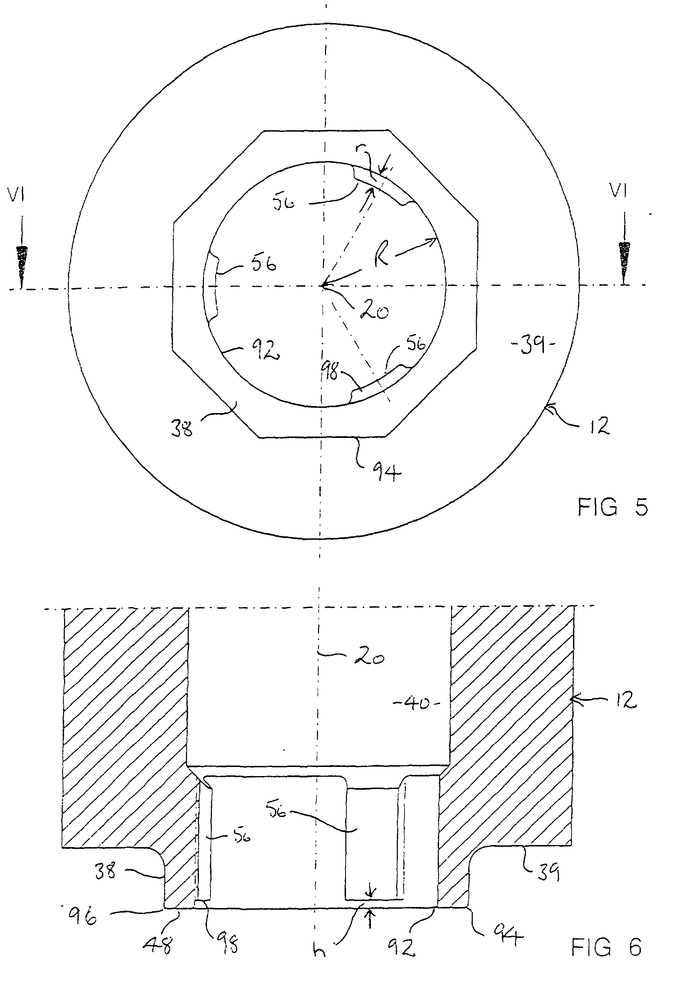

During the movement of the nut element 14 towards the sheet metal part, the sheet metal 16 is pierced by the cooperation between the ring-shaped piercing surface 34 of the cylindrical punch section 32 and the corresponding ring-like piercing edge 36 of the cylindrical projection 38 of the die button 12, with the punch slug being disposed of through the central passage 40 of the die button 12. For easier disposal, the central passage 40 of the die button 12 is provided with a larger diameter somewhat above its end face. Since the end face 34 of the cylindrical punch section of the hollow element 10 lies a distance amount H above the contact surface 42 of the hollow element 10, it is the first to contact the sheet metal part 16 during the punch movement. The sheet metal part 16 is deformed around the rounded shaping edge 44 of the hollow element 10 by the rounded forming edge 46 of the die button 12. The end face 48 of the projecting cylindrical part of the die button 12 presses the sheet metal against the base surface 30 of the ring recess 80 and deforms the sheet material in such a way that it can flow, on the one hand, into the undercut of the outer side wall 24, for example at 50, and can likewise flow into the undercut 27 of the radially inner wall of the ring recess 18, as indicated at 52. If the hollow element has a polygonal shape in the region of the outer side wall of the ring shaped recess 18, then the die button 12 is of corresponding shape in the region of the shaping edge 46, as is for example evident from Fig. 5. When the outer side wall 24 is of polygonal shape, the jacket surface 11 of the hollow element is normally provided with a corresponding shape (as shown in Fig. 4) which is, however, not absolutely essential.

One notes that the jacket surface of the hollow element 10 has an inclined flank 54 all around it, with this inclination arising in as much as the material at the outer side of the end of the hollow element 10 is pressed inwardly in order to produce the undercut at the outer side wall 24 of the ring recess 18.

Since the ring recess 18 is of polygonal shape in plan view, a security against rotation is formed by the hooked engagement of the sheet metal material into the undercut 25 of the outer ring wall 24. Through the form-locked, hooked engagement of the sheet material with this outer ring wall, a resistance against press-out is also produced.

Problematic in the prior art is the fact that the deformation of the sheet metal material within the ring recess is not sufficient - above all with thin and high-strength sheet metal - to deform the sheet metal material fully into the undercut(s), above all into the undercut 27 of the cylindrical punch section. This signifies that the sheet metal material is also not pressed firmly enough against the outer ring wall 24 of the ring recess 18, i.e. that press-out forces and torsional forces are more readily able to at least locally cancel the form-locked, hooked engagement of the sheet metal material with the hollow element 10 and to hereby cause loosening or a loss of the hollow element 10.

If one compares the illustration at the right-hand half of Fig. 1 with a hollow element in accordance with the prior art, for example in accordance with EP-A- 0 553 822, the distinction can be seen that a small supply of material is provided in the region of the cylindrical punch section which is indented at three uniformly distributed positions 55 and leads to an improved hooked engagement with the sheet material 16. One of the three positions 55 can be seen to the left-hand side of Fig. 1. The two other positions lie outside of the section plane of Fig. 1 and are thus not visible in Fig. 1.

At the left-hand side of Fig. 1, one can see that the die button 12 has a tooth extending in the longitudinal direction of the die button in the region 56, the tooth having locally indented the material of the cylindrical punch section 32, and indeed in such a way that the material in the outer region of the cylindrical punch section 32 has been deformed downwardly and radially outwardly, whereby a nose 58 is formed which lies in form-locked manner on the sheet metal material deformed into the ring recess 30. The material 58, which was displaced at this position and also at two further positions downwardly and radially outwardly, ensures on the one hand that the material in the region 60, i.e. in the region of the undercut 27 is fully surrounded by the material of the hollow element 10, so that a loosening at these three positions is substantially more difficult than in the prior art. Moreover, this displacement of the material of the element leads to the sheet metal material being more firmly pressed into the undercut 25 of the outer side wall 24 of the hollow element, whereby the security against rotation of the connection, and also the press-out resistance are likewise improved.

One notes that this shifting of the small supply of material has taken place without damaging the thread cylinder 62 of the hollow element 10. The reference numeral 63 indicates the usual conical chamfers at the ends of the thread cylinder.

The reference numeral 64 points to a nose or to a web which is arranged in the transition between the base surface 30 of the ring recess 18 and the outer side wall 24. This nose or this web, which is of triangular shape in side view, can optionally be present. Several such noses or webs then follow it which are uniformly arranged around the central longitudinal axis 22 of the hollow element 10. These noses or webs promote the security of the connection against rotation between the hollow element 10 and the sheet metal part 16 in that the sheet metal part is deformed around the noses into the regions of the undercut 27 lying therebetween. The noses or webs preferably have rounded edges in order to avoid cracks in the sheet material.

Fig. 1 thus shows how a clever modification can substantially improve the characteristics of the previously known pierce nuts of this kind. The embodiment of Fig. 1 can however be further improved.

A further possible improvement is shown in Fig. 2, and indeed by the provision of further webs or noses 66 in the transition region between the base surface 30 of the ring-shaped recess 18 and the undercut outer side wall 26 of the cylindrical punch section 32. The noses or webs 66 are formed and arranged in similar manner to the noses or webs 64 and can be provided in place of or in addition to the noses or webs 64.

Further decisive improvements can however also be effected.

In the first place, two lines 68 and 70 of Fig. 2 make it clear that the peripheral contact surface 42 of the element is smaller by an amount K, as a result of the inclined flank 54, than would be possible through the outer dimension of the jacket surface 11 of the hollow element 10. This signifies that the material of the hollow element 10 outside of the edge 72 has been largely wasted.

A waste of this kind is not present in the hollow element 10 of Fig. 3. In this example, as in all further examples, the same reference numerals are used for common parts, so that it can be assumed that the previous description of the functional design of the parts also applies for parts with the same reference numerals, unless differences are specially described. That is to say, only the important deviations with respect to the previously described variants will now be described.

In the embodiments of Figs. 3 and 4, wedge-like recesses 74 are provided at a total of eight positions around the peripherally extending contact surface 42 of the element and are produced by a cold heading process. These recesses 74 produce noses 76 which project radially into the ring recess 18 and form the undercuts 25 at the corresponding positions in the outer side wall 24 of the ring recess 18.

During the pressing-in process, the material of the sheet metal part 16 is deformed both into the wedge-shaped recesses 74 and also into the regions 78 between the noses 76, whereby an enhanced security against rotation is produced relative to the previous embodiments.

The undercuts are fully sufficient in order to generate a comparable press-out resistance.

Since the undercuts are not formed by the production of an inclined flank (54 in the previous examples) the contact surface 42 is substantially greater in the examples of Figs. 3 and 4 than in the previous examples. This can, on the one hand, be exploited in order to achieve lower surface pressures in operation, or to use the hollow elements with softer sheet metals. However, the outer dimensions of the hollow element 10 can also be reduced relative to the previous embodiments without having to fear the loss of technical characteristics. That is to say, the elements are lighter and thus can be manufactured at more favourable cost. The outer edge 43 of the contact surface 42 is simply provided with a small radius, for example 0.5 mm.

The Figs. 3 and 4 however also show a further improvement of the cylindrical punch section 32 of the hollow element 10. This now has a ring-shaped end face 34 which however merges via a ring shoulder 80 into a ring region 82 of greater diameter. The material 58, which is displaced by the teeth 56 of the die button 12 over the material of the sheet metal part 16 into the undercut 27 of the cylindrical punch section of the element, originates from the region of the cylindrical punch section beneath the ring shoulder 80, whereby the danger of deformation of the thread cylinder 62 of the nut element is further reduced.

Noses 84, which are approximately triangular in side view, are provided in the region of the ring shoulder 80 and merge at their lower sides into the material of the ring shoulder 80 and in the region of their radially inner sides into the material of the cylindrical end face 34 of the cylindrical punch section. These noses 84, which can readily be seen in plan view in Fig. 4, on the one hand stiffen the cylindrical punch section of the hollow element 10 and, on the other hand, support the ring-like end face 34 of the cylindrical punch section, so that a collapse of the cylindrical punch section in this region need not be feared.

This design leads, on the one hand, to the punch slug 88 being shaped so that it is somewhat rounded in its outer regions, as for example shown at 90, so that it can slide more easily through the central passage 40 of the die button.

The design of the cylindrical punch section in accordance with the embodiments of Figs. 3 and 4 has, however, also the advantage that the undercut 27 in the region of the cylindrical punch section can be produced by a cold-heading process without the need to deform the cylindrical punch section radially outwardly by complicated rotations. Since this deformation of the cylindrical punch section, i.e. the provision of the ring shoulder 80, the formation of the undercut 27 and the formation of the noses 84, takes place prior to the cutting of the thread cylinder 62 through this deformation of the cylindrical punch section need not be feared. The manufacture of the element of the invention is possible by a cold-heading process and is relatively simple.

The Figs. 5 and 6 show the die button 12 which can used with the element of Figs. 3 and 4 in an end view and a cross-section respectively. It is evident from the end view of Fig. 5 that the projecting cylindrical section 38 of the die button 12 projects from a ring shoulder 39 extending generally parallel to the contact surface 42 of the corresponding nut element and perpendicular to the central axis 20. The projecting cylindrical section 38 of the die button 12 has a circular peripherally extending piercing edge 92, but a polygonal, here octagonal, radial outer shaping edge 94 which is slightly rounded as shown at 96 in Fig. 6.

The three teeth 56 can be seen in plan view in Fig. 5. One notes that these teeth extend over an angular amount of about 30°, in each case related to the central longitudinal axis 22 of the die button, and have a relatively small radial dimension r with respect to the radius R of the central passage of the die button 12 in the region of the end face. The angle of 30° is not critical and is simply given as a guide value.

It is evident from Fig. 6 that the end faces 98 of the teeth 56 form step elements which are substantially set back from the free end face 48 of the die button and extend at least substantially radial to the axis 22. This signifies that they first come into use when the punch slug has already arisen through the cooperation between the cylindrical punch section of the hollow element 10 and the peripherally extending circular piercing edge 92 of the die button.

It is ensured through the octagonal shape of the section 38 of the die button 12 of Fig. 5, which is also used in Fig. 3, that the sheet metal material comes to lie in close engagement with the octagonal outer side wall 24 of the ring-shaped recess 18 including in its undercut 25.

Although three teeth 56, which can also be termed ribs or splines, already lead to reasonable results, the number of these teeth in not restricted to three. In principle, any desired number of teeth can be used. With more teeth their respective peripheral dimensions are preferably made smaller.

Finally, it is conceivable to replace the teeth 56 by a peripherally extending ring shoulder - or step - on the assumption that the punch slug 88 can be disposed of through the chamber 40 which could optionally be brought about by an ejection plunger if necessary, and assuming that the thread cylinder 62 is not damaged or deformed in undesired manner.

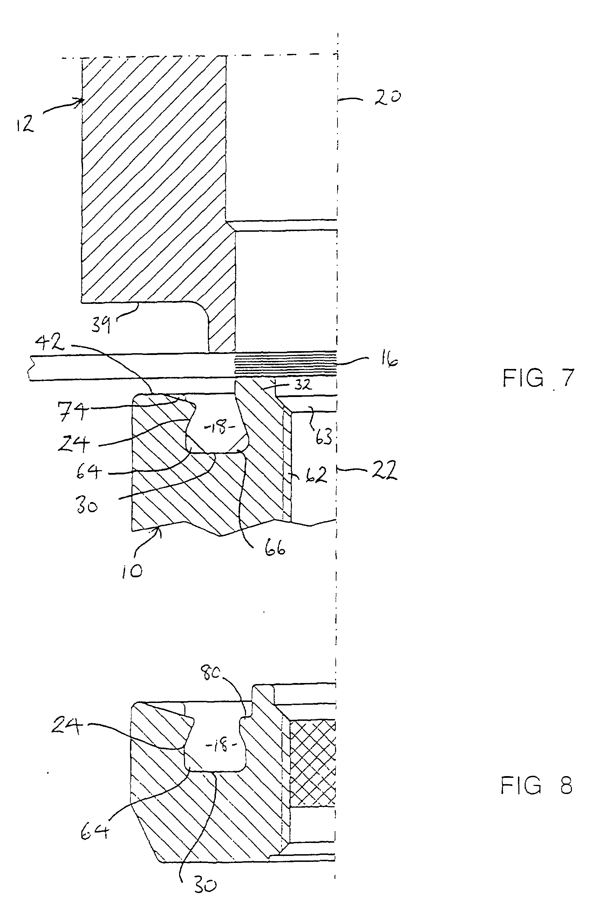

Fig. 7 shows an embodiment which falls between the embodiment of Fig. 1 and the embodiment of Figs. 3 and 4. Here, wedge-shaped recesses 74 are likewise provided in the peripherally extending contact surface 42 of the hollow element 10. The cylindrical punch section 32 would, however, be realised essentially in accordance with the cylindrical punch section 32 of Fig. 1, i.e. approximately in accordance with the prior art, but with the provision of the required material supply for the deformation by the teeth 56 of the die button (not shown in Fig. 7).

The reference numerals 64 and 66 show that in this embodiment noses or webs can also be provided in the region of the transition between the base surface 30 of the ring-like recess 18 and the outer side wall 24 and/or in the region of the undercut side wall 26.

Finally, Fig. 8 also shows a further development of the embodiment of Fig. 3 in which additional noses 64 are provided in the region of the transition from the base surface 30 of the ring-like recess 18 into the outer side wall 24. This embodiment also shows that the ring shoulder 80 can optionally be placed somewhat deeper, which can be advantageous in some circumstances.

The external shape of the element, or of the head portion thereof if the element is a bolt element, can in principle have any desired form. For example, it can be circular, oval, polygonal, or can also have a grooved or pointed contour. In addition, the ring recess 18 can also be selected as desired and can therefore also have a circular polygonal, oval, grooved or ring-shaped contour, at least so far as the outer wall of the ring-like recess is concerned. Although the contour of the ring-like recess can in principle be selected independently of the outer contour of the element, or of the head of the element, it will generally be most convenient for the ring-like recess to have an outer contour which is at least substantially of the same shape as that of the outer contour of the element or of the head of the element. The reason for this is that a ring-like recess having a contour other than circular will involve the use of a die button having a projecting cylindrical projection 38 with a matching external contour and thus it is necessary for the die button and the element for which it is used to have the same angular alignment relative to the central longitudinal axis 20. If the ring-shaped recess has an outer contour other than round, then it can most conveniently be aligned if the outer contour of the element, or the head of the element, is of the same or related shape because this ensures that a clear orientation of the element can be specified in the setting head which will match the orientation of the die button in the respective tool.

It has already been pointed out that one element can be used with a variety of sheet metal thicknesses, for example from 0.5 mm to 3 mm. Elements in accordance with the present invention can be used also with a wide range of materials. They can in particular be used with any commercially available materials of drawing quality, such as FPO steels 3, 4, 5 and higher. In additional, the elements can also be used for so-called ZSTE qualities of high-strength steels up to the highest strength levels, for example also including ZSTE 480. In addition, the elements can be used with aluminium and light alloy metal sheets.

The elements will predominantly be made in cold-forming steel materials in accordance with DIN 1654, although other steels could be used if the elements are formed by machining rather than by cold forming. For strengths above class 8, the cold forming steel materials selected will normally be heat treated in accordance with ISO 898 part 2. Elements made of such cold forming materials are able to satisfy all the normal requirements which arise in industry for the attachment of the elements to sheet metal panels and components.

As explained above, the die button used for the present invention will normally include teeth such as 56 which produce a linear displacement of the material of the element generally parallel to the central longitudinal axis 22, but could alternatively take the form of a complete ring shoulder which shifts a ring of material generally in the axial direction of the element. In each case, the die button required will have a special design, with the teeth or ring shoulder in the central passage of the die button being set back from the end face of the die button, i.e. the end face which confronts the sheet metal panel in use. This ensures that the end face of the die button presses the panel into the ring shaped recess before the teeth or ring shoulder shift material from the cylindrical punch part of the element to lock the panel material in the ring-shaped recess.

Although the base wall 30 of the ring-shaped recess is conveniently made generally flat and perpendicular to the central longitudinal axis 22 of the element, it can also have special profiles for special purposes such as are known in the prior art for shifting material beneath undercuts within the ring-shaped recess.

## Claims

1. Component assembly comprising an element (10) attached to a plate-like component (16), in particular a sheet metal component, wherein a ring-shaped recess (18) is present at an end face of the element(10) facing the component within a raised ring-shaped contact surface (42), wherein at least one undercut (25, 27) is provided in a side wall (24, 26) of the recess (18), and also features (74, 76) providing security against rotation are provided and wherein a cylindrical punch section (32) concentric to the central longitudinal axis (22) of the element projects at the said end face within the ring-shaped recess and the outer boundary wall (26) of the cylindrical punch section has a preferably ring-shaped undercut
**characterised in that**
the material of the plate-like component contacts said contact surface (42) and lines said ring recess (18) at least at the outer side wall (24) and base wall (30) thereof and is secured therein by a ring step or local noses (58) projecting radially from said cylindrical punch section produced by linearly displacing material from the outside of said cylindrical punch section (32) in order to capture or clamp material of the component (16) lining said ring-shaped recess (18) between itself and the base surface (30) of the ring-shaped recess (18).

2. Component assembly in accordance with claim 1, **characterised in that** the outer side wall (24) of the recess is of at least substantially polygonal shape in plan view in manner known per se.

3. Component assembly in accordance with claim 1 or claim 2, **characterised in that** for security against rotation a plurality of mutually spaced apart recesses (74) are provided in the raised peripherally extending contact surface (42).

4. Component assembly in accordance with claim 3, **characterised in that** raised portions (76) are provided at the outer side wall (24) of the recess (18) and form the undercuts (25), and indeed at peripheral positions which correspond to the recesses (74) in the ring-shaped contact surface (42).

5. Component assembly in accordance with claim 4, **characterised in that** when the shape of the outer side wall (24) of the recess (18) is polygonal in plan view, the raised portions (76) in the outer side wall are provided at least approximately at the centre in the respective side of the polygonal side wall.

6. Component assembly in accordance with one of the preceding claims, **characterised in that** noses (64) providing security against rotation are provided in the outer side wall of the ring-shaped recess (24) in the region of the transition from the base surface (30) of the ring-shaped recess (18) and are distributed around the central longitudinal axis (22) of the element (10).

7. Component assembly in accordance with one of the preceding claims,
**characterised in that** noses (66) providing security against rotation are provided in the region of the transition between the base surface (30) of the ring-shaped recess (18) and the cylindrical punch section (32) and are preferably uniformly distributed around the central longitudinal axis (22) of the element (10).

8. Component assembly in accordance with one of the preceding claims,
**characterised in that** the cylindrical punch section (32) has a ring-shaped end face (34) which is arranged at least substantially perpendicular to the central longitudinal axis (22) of the element or of the punch section (32) and merges via a ring shoulder (80) into a ring region (82) of the cylindrical punch section (32) of greater diameter, with the ring region being set back from the free end face (34) of the cylindrical section (32).

9. Component assembly in accordance with claim 8 **characterized in that** the cylindrical punch section (32) has a ring shaped undercut (27) on the side of the ring shoulder (80) remote from the free end face(34).

10. Component assembly in accordance with claim 8, **characterised in that** the ring region (82) of the cylindrical punch section of greater diameter merges via a ring-shaped undercut (27) into the base region (13) of the ring-shaped recess (18).

11. Component assembly in accordance with claim 8, 9 or 10,
**characterised in that** noses (84) or webs are arranged in the region of the ring shoulder of the cylindrical punch section and are preferably uniformly arranged around the central longitudinal axis (22) of the element (10), with the noses or webs preferably extending from the free end face (34) of the cylindrical section (32) up to the outer diameter of the ring-shaped region (82) of the cylindrical punch section (32) and being of approximately triangular shape in side view.

12. Component assembly in accordance with one of the preceding claims,
**characterised in that** the free end face (34) of the cylindrical punch section (32) projects beyond the raised peripherally extending contact surface (42).

13. Component assembly in accordance with one of the preceding claims,
**characterised in that** with a nut element or hollow body element, the cylindrical punch section (32) has dimensions which precludes a deformation of the thread (62) or of the hollow bore of the cylindrical punch section (32) during the insertion of the element (10).

14. Component assembly in accordance with one of the preceding claims,
**characterised in that** it can be used with plate-like components (16), in particular sheet metal parts of different thicknesses.

15. Component assembly in accordance with one of the preceding claims,
**characterised in that** the raised contact surface (42) merges in the radially outer region of the element at least substantially perpendicularly, and optionally via a small radius into the outer side surface of the element (10).

16. Component assembly in accordance with claim 15, **characterised in that** said small radius is smaller than 0.5 mm.

17. Method for the insertion of an element (10) in the form of a functional element into a plate-like component to form a component assembly in accordance with one of claims 1 to 16, wherein the functional element has at the one end face a projecting cylindrical punch section (32) which forms the radially inner boundary wall (26) of a ring recess (18) present in this end face, with the outer boundary wall (24) of the ring recess being at least substantially of polygonal shape in plan view, but can optionally also be of round circular shape, oval shape or grooved shape, and with the base (30) of the ring recess (18) standing substantially perpendicular to the central longitudinal axis (22) of the functional element, wherein the outer boundary wall (24) is inclined to the longitudinal axis (22) to form a peripherally extending undercut (25), or is inclined at least locally to the longitudinal axis (22) to form a plurality of discrete undercuts (76), with the inner boundary wall (26) optionally also being undercut (at 27) in the direction of the free end face of the punch section, wherein the punch section (32) of the functional element (10) is pressed during a setting movement onto the one side of a plate-like component (16) supported at its other side by a projecting cylindrical section of a die button (12), whereby a punched slug (88) arises, which is disposed of through the central passage (40) of the projecting cylindrical section of the die button (12) and wherein the punch section of the die button deforms the sheet metal material into the ring recess (18) and into the undercuts (25, 76),
**characterised in that** the punch section (32) of the element is indented by displacing material from its outer periphery in the generally axial direction using a die button having a projecting cylindrical section (38) having a circular peripherally extending piercing edge (92) with an inner diameter greater than the outer diameter of the said cylindrical punch section (32) at the end face thereof confronting the component (16), but with a ring step or one or more step elements (98) extending radially inside said piercing edge (92) and set back (h) from an end face (48) of said projecting cylindrical section (38) of said die button within a central passage thereof, with the radial extent (r) of said ring step or step elements being such that it or they contact said cylindrical punch section (32) of said element (10) in the radially outer region thereof over only part of the radial extent of said cylindrical punch section (32) and radially outside of any thread cylinder (62) provided therein, wherein material (52) is displaced from the punch section (32) of the element into the ring recess (18) in such a way that it projects from the inner side wall (26) of the ring recess (18) at least substantially radially into the ring recess (18) and there engages over material of the plate-like component (16) which has previously been pressed into the ring recess by the end face (48) of the projecting cylindrical section of the die button and preferably clamps this material between itself and the base surface (30) of the ring recess (18).

18. Method in accordance with claim 17,
**characterised in that**
the punch section (32) of the element is indented locally at its end face using a die button which has teeth (56), for example from two to six teeth, which are arranged radially within its projecting cylindrical punch section, which project radially inwardly into the central passage of the die button and are set back from the end face of the projecting cylindrical section of the die button in such a way that material (52) is displaced from the punch section (32) of the element into the ring recess (18) in such a way that it projects from the inner side wall (26) of the ring recess (18) at least substantially radially into the ring recess (18) and there engages over material of the plate-like component (16) which has previously been pressed into the ring recess by the end face (48) of the projecting cylindrical section of the die button and preferably clamps this material between itself and the base surface (30) of the ring recess (18).

19. Die button (12), in particular for use in a method in accordance with claim 17 to form a component assembly wherein the die button
has a projecting cylindrical section (38) having a circular peripherally extending piercing edge (92) with an inner diameter greater than the outer diameter of the said cylindrical punch section (32) at the end face thereof confronting the component (16), **characterised in that** a ring step or one or more step elements (98) is/are provided extending radially inside said piercing edge (92) over only part of the radial extent of said cylindrical punch section (32) and set back (h) from an end face (48) of said projecting cylindrical section (38) of said die button within a central passage thereof.

20. Die button (12) in accordance with claim 19
**characterised in that**
the projecting cylindrical section (38) has an outer contour corresponding to that of the outer side wall (24) of a ring recess (18) of an element (10) with which it is to be used, but with a diameter or diameters smaller than that or those of the outer side wall (24) of the ring recess (12) by an amount approximately equal to twice the thickness of the plate-like component with which it is to be used.

## Patentansprüche

1. Komponentenzusammenbau mit einem Element (10), das an einer plattenartigen Komponente (16), insbesondere einer Blechkomponente befestigt ist, wobei an einer zu der Komponente weisenden Stirnfläche des Elementes (10) in einer erhöhten ringförmigen Kontaktfläche (42) eine ringförmige Ausnehmung (18) vorgesehen ist, wobei in einer Seitenwand (24, 26) der Ausnehmung (18) zumindest eine Hinterschneidung (25, 27) vorgesehen ist, und auch Merkmale (74, 76), die eine Verdrehsicherung vorsehen, vorgesehen sind, und wobei ein zylindrischer Stanzabschnitt (32), der bezüglich der zentralen Längsachse (22) des Elementes konzentrisch angeordnet ist, an der Stirnfläche in der ringförmigen Ausnehmung vorragt, und die äußere Umrandungswand (26) des zylindrischen Stanzabschnittes eine bevorzugt ringförmige Hinterschneidung besitzt, **dadurch gekennzeichnet, dass** das Material der plattenartigen Komponente mit der Kontaktfläche (42) in Kontakt steht und die Ringausnehmung (18) zumindest an ihrer Außenseitenwand (24) und Basiswand (30) auskleidet und darin durch eine Ringstufe oder lokale Nasen (58) gesichert ist, die von dem zylindrischen Stanzabschnitt radial vorragen und dadurch erzeugt werden, dass Material von der Außenseite des zylindrischen Stanzabschnittes (32) linear verschoben wird, um Material der Komponente (16), das die ringförmige Ausnehmung (18) auskleidet, zwischen diesem und der Basisfläche (30) der ringförmigen Ausnehmung (18) zu halten oder zu klemmen.

2. Komponentenzusammenbau nach Anspruch 1, **dadurch gekennzeichnet, dass** die Außenseitenwand (24) der Ausnehmung in einer an sich bekannten Draufsicht eine zumindest im Wesentlichen mehreckige Form aufweist.

3. Komponentenzusammenbau nach einem der Ansprüche 1 oder 2, **dadurch gekennzeichnet, dass** zur Verdrehsicherung eine Vielzahl von gegenseitig beabstandeten Ausnehmungen (74) in der erhöhten, sich um den Umfang erstreckenden Kontaktfläche (42) vorgesehen ist.

4. Komponentenzusammenbau nach Anspruch 3, **dadurch gekennzeichnet, dass** die erhöhten Abschnitte (76) an der Außenseitenwand (24) der Ausnehmung (18) vorgesehen sind und die Hinterschneidungen (25) bilden, und zwar an Umfangspositionen, die den Ausnehmungen (74) in der ringförmigen Kontaktfläche (72) entsprechen.

5. Komponentenzusammenbau nach Anspruch 4, **dadurch gekennzeichnet, dass**, wenn die Form der Außenseitenwand (24) der Ausnehmung (18) in der Draufsicht mehreckig ausgebildet ist, die erhöhten Abschnitte (76) in der Außenseitenwand zumindest in etwa an dem Zentrum in der jeweiligen Seite der mehreckigen Seitenwand vorgesehen sind.

6. Komponentenzusammenbau nach einem der vorhergehenden Ansprüche, **dadurch gekennzeichnet, dass** Nasen (64), die eine Verdrehsicherung vorsehen, in der Außenseitenwand der ringförmigen Ausnehmung (24) in dem Bereich des Übergangs von der Basisfläche (30) der ringförmigen Ausnehmung (18) vorgesehen und um die zentrale Längsachse (22) des Elementes (10) herum verteilt sind.

7. Komponentenzusammenbau nach einem der vorhergehenden Ansprüche, **dadurch gekennzeichnet, dass** Nasen (66), die eine Verdrehsicherung vorsehen, in dem Bereich des Übergangs zwischen der Basisfläche (30) der ringförmigen Ausnehmung (18) und dem zylindrischen Stanzabschnitt (32) vorgesehen und bevorzugt gleichförmig um die zentrale Längsachse (22) des Elementes (10) herum verteilt sind.

8. Komponentenzusammenbau nach einem der vorhergehenden Ansprüche, **dadurch gekennzeichnet, dass** der zylindrische Stanzabschnitt (32) eine ringförmige Stirnfläche (34) besitzt, die zumindest im Wesentlichen rechtwinklig zu der zentralen Längsachse (22) des Elementes oder des Stanzabschnitts (32) angeordnet ist und über eine ringförmige Schulter (80) in einen Ringbereich (82) des ringförmigen Stanzabschnittes (32) mit größerem Durchmesser übergeht, wobei der Ringbereich von der freien Stirnfläche (34) des zylindrischen Abschnittes (32) zurückversetzt ist.

9. Komponentenzusammenbau nach Anspruch 8, **dadurch gekennzeichnet, dass** der zylindrische Stanzabschnitt (32) eine ringförmige Hinterschneidung (27) an der Seite der Ringschulter (80), die von der freien Stirnfläche (34) entfernt ist, besitzt.

10. Komponentenzusammenbau nach Anspruch 8, **dadurch gekennzeichnet, dass** der Ringbereich (82) des zylindrischen Stanzabschnittes mit größerem Durchmesser über eine ringförmige Hinterschneidung (27) in den Basisbereich (13) der ringförmigen Ausnehmung (18) übergeht.

11. Komponentenzusammenlbau nach einem der Ansprüche 8, 9 oder 10, **dadurch gekennzeichnet, dass** Nasen (34) oder Stege in dem Bereich der Ringschulter des zylindrischen Stanzabschnittes angeordnet und bevorzugt gleichförmig um die zentrale Längsachse (22) des Elementes (10) herum angeordnet sind, wobei sich die Nasen oder Stege bevorzugt von der freien Stirnfläche (34) des zylindrischen Abschnittes (32) bis zu dem Außendurchmesser des ringförmigen Bereiches (82) des zylindrischen Stanzabschnittes (32) erstrecken und in der Seitenansicht eine in etwa dreieckige Form besitzen.

12. Komponentenzusammenbau nach einem der vorhergehenden Ansprüche, **dadurch gekennzeichnet, dass** die freie Stirnfläche (34) des zylindrischen Stanzabschnittes (32) über die erhöhte, sich um den Umfang erstreckende Kontaktfläche (42) vorragt.

13. Komponentenzusammenbau nach einem der vorhergehenden Ansprüche, **dadurch gekennzeichnet, dass** bei Verwendung eines Mutternelementes oder eines Hohlkörperelementes der zylindrische Stanzabschnitt (32) Abmessungen besitzt, die eine Verformung des Gewindes (62) oder der Hohlbohrung des zylindrischen Stanzabschnittes (32) während des Einsetzens des Elementes (10) ausschließen.

14. Komponentenzusammenbau nach einem der vorhergehenden Ansprüche, **dadurch gekennzeichnet, dass** dieser mit plattenartigen Komponenten (16), insbesondere Blechteilen mit verschiedenen Dicken verwendet werden kann.

15. Komponentenzusammenbau nach einem der vorhergehenden Ansprüche, **dadurch gekennzeichnet, dass** die erhöhte Kontaktfläche (42) in den radial äußeren Bereich des Elementes zumindest im Wesentlichen rechtwinklig ist und optional dazu über einen kleinen Radius in die Außenseitenfläche des Elementes (10) übergeht.

16. Komponentenzusammenbau nach Anspruch 15, **dadurch gekennzeichnet, dass** der kleine Radius kleiner als 0,5 mm ist.

17. Verfahren zum Einsetzen eines Elementes (10) in der Form eines Funktionselementes in eine plattenartige Komponente, um einen Komponentenzusammenbau nach einem der Ansprüche 1 bis 16 zu bilden, wobei das Funktionselement an der einen Stirnfläche einen vorragenden zylindrischen Stanzabschnitt (32) aufweist, der die radial innere Umrandungswand (26) einer Ringausnehmung (18), die in dieser Stirnfläche vorhanden ist, bildet, wobei die äußere Umrandungswand (24) der Ringausnehmung in der Draufsicht zumindest im Wesentlichen eine mehreckige Form besitzt, optional jedoch auch eine runde kreisförmige Form, eine ovale Form oder eine mit Nuten versehene Form aufweisen kann, und wobei die Basis (30) der Ringausnehmung (18) im Wesentlichen rechtwinklig zu der zentralen Längsachse (22) des Funktionselementes steht, wobei die äußere Umrandungswand (24) zu der Längsachse (22) hin schräg gestellt ist, um eine sich um den Umfang herum erstreckende Hinterschneidung (25) zu bilden, oder zumindest lokal zu der Längsachse (22) hin schräg gestellt ist, um mehrere einzelne Hinterschneidungen (76) zu bilden, wobei die innere Umrandungswand (26) optional auch (bei 27) in der Richtung der freien Stirnfläche des Stanzabschnittes hinterschnitten ist, wobei der Stanzabschnitt (32) des Funktionselementes (10) während einer Stauchbewegung auf die eine Seite einer plattenartigen Komponente (16) gepresst wird, die an ihrer anderen Seite durch einen vorragenden zylindrischen Abschnitt einer Matrize (12) gestützt ist, wodurch ein gestanzter Butzen (88) entsteht, der durch den zentralen Durchgang (44) des vorragenden zylindrischen Abschnittes der Matrize (12) entsorgt wird, und wobei der Stanzabschnitt der Matrize das Blechmaterial in die ringförmige Ausnehmung (18) und in die Hinterschneidungen (25, 76) hinein verformt, **dadurch gekennzeichnet, dass** der Stanzabschnitt (32) des Elementes vertieft wird, indem Material von seinem Außenumfang in der allgemein axialen Richtung unter Verwendung einer Matrize verdrängt wird, die einen vorragenden zylindrischen Abschnitt (38) besitzt, der eine kreisförmige, sich um den Umfang herum erstreckende Stanzkante (92) mit einem Innendurchmesser, der größer als der Außendurchmesser des zylindrischen Stanzabschnittes (32) ist, an seiner Stirnfläche, die der Komponente (16) gegenüberliegt, umfasst, wobei sich aber eine Ringstufe oder eines oder mehrere Stufenelemente (98) radial in der Stanzkante (92) erstrecken und von einer Stirnfläche (48) des vorragenden zylindrischen Abschnittes (38) der Matrize in ihren Zentraldurchgang zurückversetzt (h) sind, wobei die radiale Ausdehnung (r) der Ringstufe oder der Stufenelemente derart ausgebildet ist, dass diese oder sie mit dem zylindrischen Stanzabschnitt (32) des Elementes (10) in seinem radial äußeren Bereich nur über einen Teil der radialen Ausdehnung des zylindrischen Stanzabschnittes (32) und radial außerhalb eines Gewindezylinders (62), der darin vorgesehen ist, in Kontakt stehen, wobei Material (52) von dem Stanzabschnitt (32) des Elementes in die Ringausnehmung (18) derart verdrängt wird, dass es von der inneren Seitenwand (26) der Ringausnehmung (18) zumindest im Wesentlichen radial in die Ringausnehmung (18) vorragt und dort über Material der plattenartigen Komponente (16) eingreift, das vorher durch die Stirnfläche (48) des vorragenden zylindrischen Abschnittes der Matrize in die Ringausnehmung gepresst worden ist und bevorzugt dieses Material zwischen sich und der Basisfläche (30) der Ringausnehmung (18) klemmt.

18. Verfahren nach Anspruch 17, **dadurch gekennzeichnet, dass** der Stanzabschnitt (32) des Elementes lokal an seiner Stirnfläche unter Verwendung einer Matrize mit Vertiefungen versehen wird, die Zähne (56), beispielsweise zwei bis zu sechs Zähne besitzt, die radial in ihrem vorragenden zylindrischen Stanzabschnitt angeordnet sind, die radial einwärts in den zentralen Durchgang der Matrize vorragen und von der Stirnfläche des vorragenden zylindrischen Abschnittes der Matrize derart zurückversetzt sind, dass Material (52) von dem Stanzabschnitt (32) des Elementes in die Ringausnehmung (18) derart gedrängt wird, dass es von der inneren Seitenwand (26) der Ringausnehmung (18) zumindest im Wesentlichen radial in die Ringausnehmung (18) vorragt und dort über Material der plattenartigen Komponente (16) eingreift, das vorher durch die Stirnfläche (48) des vorragenden zylindrischen Abschnittes der Matrize in die Ringausnehinung gepresst worden ist, und dieses Material bevorzugt zwischen sich selbst und der Basisfläche (30) der Ringausnehmung (18) klemmt.

19. Matrize (12) insbesondere zur Verwendung bei einem Verfahren nach Anspruch 17, um einen Komponentenzusammenbau zu bilden, wobei die Matrize einen vorragenden zylindrischen Abschnitt (38), der eine kreisförmige, sich um den Umfang herum erstreckende Stanzkante (92) mit einem Innendurchmesser aufweist, der größer als der Außendurchmesser des zylindrischen Stanzabschnittes (32) ist, an seiner Stirnfläche, die der Komponente (16) gegenüberliegt, aufweist, **dadurch gekennzeichnet, dass** eine Ringstufe oder eines oder mehrere Stufenelemente (98) vorgesehen ist bzw. sind, die sich nur über einen Teil der radialen Ausdehnung des zylindrischen Stanzabschnittes (32) radial in der Stanzkante (92) erstrecken und von einer Stirnfläche (48) des vorragenden zylindrischen Abschnittes (38) der Matrize in ihrem zentralen Durchgang zurückversetzt (h) ist bzw. sind.

20. Matrize (12) nach Anspruch 19, **dadurch gekennzeichnet, dass** der vorragende zylindrische Abschnitt (38) eine äußere Kontur besitzt, die derjenigen der Außenseitenwand (24) einer Ringausnehmung (18) eines Elementes (10), mit dem diese verwendet werden soll, entspricht, jedoch mit einem Durchmesser oder mit Durchmessern, die um eine Größe, die in etwa gleich dem Doppelten der Dicke der plattenartigen Komponente, mit der diese verwendet werden soll, entspricht, kleiner als derjenige bzw. diejenigen der Außenseitenwand (34) der Ringausnehmung (12) sind.

## Revendications

1. Assemblage de pièces comportant un élément (10) attaché à une pièce (16) analogue à une plaque, en particulier une pièce de métal en feuille, dans lequel un évidement (18) de forme annulaire est présent à une face extrême de l'élément (10) tourné vers la pièce dans une surface de contact (42) en forme d'anneau saillant (42), dans lequel au moins une contre-dépouille (25, 27) est prévue dans une paroi latérale (24, 26) de l'évidement (18) et, aussi, des configurations (74, 76) procurant une sécurité contre une rotation sont prévues, et dans lequel une section de poinçon cylindrique (32) concentrique à l'axe longitudinal central (22) de l'élément fait saillie à ladite face extrême à l'intérieur de l'évidement de forme annulaire et la paroi limite extérieure (26) de la section de poinçon cylindrique présente avantageusement une contre-dépouille de forme annulaire,
**caractérisé en ce que**
la matière de la pièce analogue à une plaque est en contact avec ladite surface extérieure (42) et recouvre ledit évidement annulaire (18) au moins à sa paroi latérale extérieure (24) et sa paroi de base (30) et y est fixée par un épaulement annulaire ou des becs locaux (58) faisant saillie radialement de ladite section de poinçon cylindrique, produits par un déplacement linéaire de matière depuis le côté extérieur de ladite section de poinçon cylindrique (32) afin d'emprisonner ou de brider de la matière de la pièce (16) recouvrant ledit évidement (18) de forme annulaire entre elle-même et la surface de base (30) de l'évidement (18) de forme annulaire.

2. Assemblage de pièces selon la revendication 1, **caractérisé en ce que** la paroi latérale extérieure (24) de l'évidement est au moins de forme sensiblement polygonale, vue en plan, d'une manière connue en soi.

3. Assemblage de pièces selon la revendication 1 ou la revendication 2, **caractérisé en ce que**, pour s'opposer de façon sûre à toute rotation, plusieurs évidements mutuellement espacés (74) sont prévus dans la surface de contact saillante (42) s'étendant de façon périphérique.

4. Assemblage de pièces selon la revendication 3, **caractérisé en ce que** des parties saillantes (76) sont prévues à la paroi latérale extérieure (24 )de l'évidement (18) et forment les contre-dépouilles (25), et en fait dans des positions périphériques qui correspondent aux évidements (74) dans la surface de contact (42) de forme annulaire.

5. Assemblage de pièces selon la revendication 4, **caractérisé en ce que**, lorsque la forme de la paroi latérale extérieure (24) de l'évidement (18) est polygonale, vue en plan, les parties saillantes (76) dans la paroi latérale extérieure sont situées au moins approximativement au centre dans le côté respectif de la paroi latérale polygonale.

6. Assemblage de pièces selon l'une des revendications précédentes, **caractérisé en ce que** des mentonnets (64) s'opposant de façon sûre à toute rotation sont prévus dans la paroi latérale extérieure de l'évidement (24) de forme annulaire dans la région de la transition à partir de la surface de base (30) de l'évidement (18) de forme annulaire et sont répartis autour de l'axe longitudinal central (22) de l'élément (10).

7. Assemblage de pièces selon l'une des revendications précédentes, **caractérisé en ce que** des mentonnets (66) s'opposant de façon sûre à toute rotation sont prévus dans la région de la transition entre la surface de base (30) de l'évidement (18) de forme annulaire et la section de poinçon cylindrique (32) et sont avantageusement répartis de façon uniforme autour de l'axe longitudinal central (22) de l'élément (10).

8. Assemblage de pièces selon l'une des revendications précédentes,
**caractérisé en ce que** la section de poinçon cylindrique (32) présente un face extrême (34) de forme annulaire qui est agencée au moins sensiblement perpendiculairement à l'axe longitudinal central (22) de l'élément ou de la section de poinçon (32) et qui se prolonge, par l'intermédiaire d'un épaulement annulaire (80), en une région annulaire (82) de la section de poinçon cylindrique (32) de plus grand diamètre, la région annulaire étant établie en retrait de la face extrême libre (34) de la section cylindrique (32).

9. Assemblage de pièces selon la revendication 8, **caractérisé en ce que** la section de poinçon cylindrique (32) présente une contre-dépouille (27) de forme annulaire sur le côté de l'épaulement annulaire (80) éloigné de la face extrême libre (34).

10. Assemblage de pièces selon la revendication 8, **caractérisé en ce que** la région annulaire (82) de la section de poinçon cylindrique de plus grand diamètre se prolonge, par l'intermédiaire d'une contre-dépouille (27) de forme annulaire, dans la région de base (13) de l'évidement (18) de forme annulaire.

11. Assemblage de pièces selon la revendication 8, 9 ou 10, **caractérisé en ce que** des mentonnets (84) ou voiles sont agencés dans la région de l'épaulement annulaire de la section de poinçon cylindrique et sont avantageusement agencés de façon uniforme autour de l'axe longitudinal central (22) de l'élément (10), les mentonnets ou voiles s'étendant avantageusement depuis la face extrême libre (34) de la section cylindrique (32) jusqu'au diamètre extérieur de la région (82) de forme annulaire de la section de poinçon cylindrique (32) et étant de forme approximativement triangulaire, vus de côté.

12. Assemblage de pièces selon l'une des revendications précédentes,
**caractérisé en ce que** la face extrême libre (34) de la section de poinçon cylindrique (32) fait saillie au-delà de la surface de contact saillante (42) s'étendant de façon périphérique.

13. Assemblage de pièces selon l'une des revendications précédentes,
**caractérisé en ce que**, avec un élément à écrou ou un élément à corps creux, la section de poinçon cylindrique (32) a des dimensions qui empêchent une déformation du filet (62) ou de l'alésage creux de la section de poinçon cylindrique (32) pendant l'insertion de l'élément (10).

14. Assemblage de pièces selon l'une des revendications précédentes,
**caractérisé en ce qu'**il peut être utilisé avec des pièces (16) analogues à des plaques, en particulier des pièces en métal en feuille de différentes épaisseurs.

15. Assemblage de pièces selon l'une des revendications précédentes,
**caractérisé en ce que** la surface de contact saillante (42) se prolonge dans la région radialement extérieure de l'élément au moins sensiblement perpendiculairement, et facultativement par l'intermédiaire d'un petit rayon dans la surface latérale extérieure de l'élément (10).

16. Assemblage de pièces selon la revendication 15, **caractérisé en ce que** ledit petit rayon est inférieur à 0,5 mm.

17. Procédé pour l'insertion d'un élément (10) sous la forme d' un élément fonctionnel dans une pièce analogue à une plaque pour former un assemblage de pièces selon l'une des revendications 1 à 16, dans lequel l'élément fonctionnel comporte, à la face extrême, une section de poinçon cylindrique en saillie (32) qui forme la paroi limite radialement intérieure (26) d'un évidement annulaire (18) présent dans cette face extrême, la paroi limite extérieure (24) de l'évidement annulaire étant au moins sensiblement de forme polygonale vue en plan, mais pouvant facultativement être également de forme circulaire ronde, de forme ovale ou de forme rainurée, et avec la base (30) de l'évidement annulaire (18) s'étendant sensiblement perpendiculairement à l'axe longitudinal central (22) de l'élément fonctionnel, dans lequel la paroi limite extérieure (24) est inclinée par rapport à l'axe longitudinal (22) pour former une contre-dépouille (25) s'étendant de façon périphérique, ou est inclinée au moins localement par rapport à l'axe longitudinal (22) pour former plusieurs contre-dépouilles distinctes (76), la paroi limite intérieure (26) étant également, facultativement, en contre-dépouille (en 27) dans la direction de la face extrême libre de la section de poinçon, dans lequel la section de poinçon (32) de l'élément fonctionnel (10) est appliquée sous pression, pendant un mouvement d'ajustement, sur le côté d'une pièce (16) analogue à une plaque supportée par son autre côté par une section cylindrique en saillie d'un bouton de matrice (12), grâce à quoi une pastille poinçonnée (88) monte, laquelle est jetée en empruntant le passage central (40) de la section cylindrique en saillie du bouton de matrice (12), et dans lequel la section de poinçon du bouton de matrice est pénétrée, en la déformant, la matière métallique en feuille dans l'évidement annulaire (18) et dans les contre-dépouilles (25, 76),
**caractérisé en ce que** la section de poinçon (32) de l'élément est marquée en creux par un déplacement de matière depuis sa périphérie extérieure dans la direction globalement axiale en utilisant un bouton de matrice ayant une section cylindrique (38) en saillie présentant un tranchant circulaire périphérique (92) d'un diamètre intérieur supérieur au diamètre extérieur de ladite section de poinçon cylindrique (32) à sa face extrême opposée à la pièce (16), mais avec un épaulement annulaire ou un ou plusieurs éléments épaulés (98) s'étendant radialement vers l'intérieur dudit tranchant (92) et en retrait (h) d'une face extrême (48) de ladite section cylindrique en saillie (38) dudit bouton de matrice dans un passage central de celui-ci, l'étendue radiale (r) dudit épaulement annulaire ou desdits éléments épaulés étant telle qu'il entre ou qu'ils entrent en contact avec ladite section de poinçon cylindrique (32) dudit élément (10) dans sa région radialement extérieure seulement sur une partie de l'étendue radiale de ladite section de poinçon cylindrique (32) et radialement à l'extérieur de tout filetage cylindrique (62) prévu à l'intérieur de celle-ci, dans lequel de la matière (52) est déplacée depuis la section de poinçon (32) de l'élément dans l'évidement annulaire (18) d'une manière telle qu'elle fait saillie de la paroi latérale intérieure (26) de l'évidement annulaire (18) au moins sensiblement radialement dans l'évidement annulaire (18) et, là, entre en prise sur de la matière de la pièce (16) analogue à une plaque qui a été précédemment introduite sous pression dans l'évidement annulaire par la face extrême (48) de la section cylindrique en saillie du bouton de matrice et, avantageusement, bride cette matière entre elle-même et la surface de base (30) de l'évidement annulaire (18).

18. Procédé selon la revendication 17,
**caractérisé en ce que**
la section de poinçon (32) de l'élément est marquée en creux localement à sa face extrême en utilisant un bouton de matrice qui comporte des dents (56), par exemple deux à six dents, qui sont agencées radialement à l'intérieur de sa section de poinçon cylindrique en saillie, qui font saillie radialement vers l'intérieur dans le passage central du bouton de matrice et qui sont en retrait de la face extrême de la section cylindrique en saillie du bouton de matrice d'une manière telle que de la matière (52) est déplacée de la section de poinçon (32) de l'élément vers l'intérieur de l'évidement annulaire (18) d'une façon telle qu'elle fait saillie depuis la paroi latérale intérieure (26) de l'évidement annulaire (18) au moins sensiblement radialement dans l'évidement annulaire (18) et, là, entre en prise sur la matière de la pièce (16) analogue à une plaque qui a été précédemment introduite en étant poussée dans l'évidement annulaire par la face extrême (48) de la section cylindrique en saillie du bouton de matrice et avantageusement bride cette matière entre elle-même et la surface de base (30) de l'évidement annulaire (18).

19. Bouton de matrice (12), destiné à être utilisé en particulier dans un procédé selon la revendication 17 pour former un assemblage de pièces, dans lequel le bouton de matrice
comporte une section cylindrique en saillie (38) ayant un tranchant circulaire périphérique (92) d'un diamètre intérieur supérieur au diamètre extérieur de ladite section de poinçon cylindrique (32) à sa face extrême opposée à la pièce (16), **caractérisé en ce qu'**un épaulement annulaire ou un ou plusieurs éléments épaulés (98) est/sont prévu(s), s'étendant radialement vers l'intérieur dudit tranchant (92) sur seulement une partie de l'étendue radiale de ladite section de poinçon cylindrique (32) et en retrait (h) d'une face extrême (48) de ladite section cylindrique en saillie (38) dudit bouton de matrice à l'intérieur d'un passage central de celui-ci.

20. Bouton de matrice (12) selon la revendication 19, **caractérisé en ce que**
la section cylindrique en saillie (38) présente un contour extérieur correspondant à celui de la paroi latérale extérieure (24) d'un évidement annulaire (18) d'un élément (10) avec lequel elle est destinée à être utilisée, mais avec un diamètre ou des diamètres inférieurs à celui ou à ceux de la paroi latérale extérieure (24) de l'évidement annulaire (12), d'une quantité approximativement égale au double de l'épaisseur de la pièce analogue à une plaque avec laquelle elle doit être utilisée.
